# FASCICULE DE BREVET EUROPEEN

(11) **EP 0 376 796 B1**
(45) Date de publication et mention de la délivrance du brevet: **02.03.1994**
(21) Numéro de dépôt: 89403529.4
(22) Date de dépôt: 18.12.1989
(51) Int. Cl.: B08B 9/04, F17D 3/08

(54) **Racleur pour conduite de distribution de liquide notamment pour produits pétroliers**
Molch für eine Flüssigkeitsverteilerleitung, insbesondere für Kohlenwasserstoffprodukte
Pig for a liquid-distribution piping, especially for hydrocarbon products

(30) Priorité: 20.12.1988 FR 8816847
(43) Date de publication de la demande: 04.07.1990
(73) Titulaire: FMC EUROPE S.A., F-89103 Sens Cédex (FR)
(72) Inventeur: Le Devehat, Eugène, F-89100 Saligny (FR)
(74) Mandataire: Rinuy, Santarelli

(56) Documents cités:
- DE-A- 2 029 824
- DE-A- 2 801 378
- DE-A- 3 511 260
- FR-A- 2 612 091
- GB-A- 483 941
- US-A- 1 756 378

## Description

L'invention concerne un racleur bidirectionnel pour conduite de distribution de liquides à section de passage constante, par exemple de distribution d'huiles, de produits pétroliers, de produits alimentaires ou peintures...

Lorsqu'une même conduite est utilisée pour la distribution successive de plusieurs liquides, il est connu, lorsqu'on veut changer de liquide, après avoir arrêté en amont de cette conduite l'alimentation du premier liquide, et avant d'ouvrir, également en amont de cette conduite, l'alimentation du liquide suivant, de faire circuler dans cette conduite, d'amont en aval et réciproquement, un racleur "captif" bidirectionnel adapté à balayer la paroi intérieure de cette conduite et à refouler vers l'aval les résidus du premier liquide. Ce racleur établit en outre une séparation fiable entre liquides successifs dont on évite ainsi des contaminations les uns par les autres.

Ceci est notamment décrit dans le document FR-A-2.222.587 ou encore dans le document DE-A1-3.032.532.

Les racleurs connus à ce jour, qu'ils soient sphériques, à garniture ou à cylindre, sont en matière élastique pour absorber les variations de diamètre intérieur de la conduite, notamment du fait des tolérances de fabrication, et pour absorber les chocs en fin de course.

Or les zones de ces racleurs qui viennent en contact, avec un faible jeu, avec la paroi intérieure des conduites pour en détacher les résidus mouillants qui y adhèrent, sont soumis à une usure importante qui nécessite des remplacements fréquents de ces racleurs, avec mise au rebut de la totalité de ceux-ci après usage.

On connaît déjà, d'après le document FR-A-2.612.091, un racleur bidirectionnel formé de deux nez en caoutchouc armé, deux coupelles souples en caoutchouc armé, une entretoise en caoutchouc armé, deux vis six pans en acier, et deux rondelles plates en acier. Grâce à leur souplesse, les coupelles augmentent de diamètre par serrage et blocage des vis de serrage, ce qui peut rattraper de l'usure. En fait, aucun remplacement d'une partie du racleur, c'est-à-dire des coupelles, n'est envisagé. D'autre part, ce racleur est conçu pour ne pas présenter la rigidité et le peu de souplesse des racleurs précédemment utilisés.

On connaît aussi un racleur bidirectionnel de IST formé d'une portion centrale de corps comportant une portion tubulaire et une paroi transversale, et de deux pièces d'extrémité comportant chacune une portion interne cylindrique. Ces portions internes sont maintenues appliquées contre la paroi transversale par une vis et un écrou. Deux joints d'étanchéité de faible dimension radiale sont maintenus à la périphérie du racleur par simple pincement entre des portées radialement très étroites ménagées sur les tranches de la portion tubulaire du corps et sur les pièces d'extrémité, laissant ainsi subsister de part et d'autre et à l'intérieur de ces joints des espaces susceptibles de s'encrasser.

L'invention a pour objet de pallier les inconvénients précités en proposant un racleur rigide et massif dont on puisse réutiliser des parties non usées.

En outre les racleurs connus sont dépourvus de tout moyen de guidage adapté à les guider lors du franchissement des coudes ; d'autre part lors de la venue en butée de deux racleurs l'un contre l'autre, la zone d'appui entre leurs extrémités arrondies est très petite, ce qui peut provoquer des usures très localisées et/ou empêcher un positionnement relatif précis entre deux tels racleurs en appui l'un contre l'autre.

Selon un autre aspect, l'invention propose de pallier ces inconvénients.

Elle propose à cet effet un racleur bidirectionnel pour conduite de distribution de liquide, comportant deux portions terminales, une portion médiane étranglée comportant un manchon de surface externe concave entourant une portion radialement centrale, et deux segments d'usure montés amovibles autour de la portion radialement centrale et maintenus axialement de part et d'autre de la portion médiane étranglée par une vis engagée dans une pièce dont fait partie l'une des portions terminales et un écrou engagé dans une autre pièce dont fait partie l'autre des portions terminales, caractérisé en ce que l'écrou est solidaire de cette autre pièce, les deux pièces sont assujetties l,une contre l'autre par l'écrou et la vis en formant, de façon complémentaire l'une de l'autre, un corps allongé traversant le manchon, et les segments d'usure sont solidaires du manchon.

Selon des dispositions préférées de l'invention, éventuellement combinées :
- les segments d'usure présentent axialement en regard des portions terminales une nervure de centrage ;
- les segments d'usure amovibles ont une surface radialement externe lisse ;
- les segments d'usure amovibles présentent en saillie radialement externe, un bourrelet bordé par deux chanfreins ;
- les segments d'usure présentent une gorge annulaire ouverte radialement vers l'extérieur ;
- la gorge sépare deux bourrelets formant lèvres de raclage ;
- les segments présentent des fentes cylindriques débouchant axialement l'une vers l'autre ;
- les portions terminales sont de forme tronconique (ce qui est original en soi) ;
- le demi-angle au sommet α de ces portions tronconiques est compris entre 20 et 25°;
- la longueur Lₑ des portions tronconiques vaut entre 35% et 45% du diamètre D des segments d'usure ;
- la distance Lₘ entre ces portions tronconiques est sensiblement comprise entre 0,75 et 0,85 fois le diamètre D des segments d'usure ;
- la longueur L de ce racleur est sensiblement comprise entre 1,55 et 1,65 fois le diamètre D des segments d'usure;
- la portion médiane étranglée a un rayon de courbure r compris entre 0,40 et 0,50 fois le diamètre D des segments d'usure ;
- la vis et l'écrou sont isolés de façon étanche vis à vis de l'extérieur dudit racleur ;
- il comporte, sensiblement à mi-longueur, un anneau à aimantation radiale permanente avantageusement amovible.

L'invention vise également une utilisation du racleur pour le raclage d'une conduite comportant au moins un coude dont le rayon de courbure moyen (R1) vaut approximativement une fois le diamètre externe des segments d'usure.

Des objets, caractéristiques et avantages de l'invention ressortent de la description qui suit, donnée à titre d'exemple non limitatif, en regard des dessins annexés sur lesquels :
- la figure 1, est une vue en coupe d'un racleur conforme à l'invention ;
- la figure 2, est une vue en coupe axiale du manchon du racleur de la figure 1 ;
- la figure 3, est une variante simplifiée du manchon de la figure 2 ;
- la figure 4, est une vue partielle d'une autre variante du manchon de la figure 2 ;
- la figure 5, est une vue partielle d'une autre variante du manchon de la figure 2 ;
- la figure 6 est une vue partielle d'encore une autre variante du manchon de la figure 2 ; et
- la figure 7, est une vue en coupe d'un coude de conduite en train d'être franchi par le racleur de la figure 1 ;

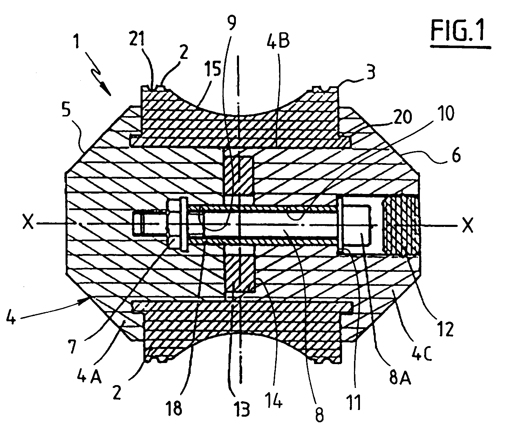

La figure 1 représente un racleur 1 sensiblement rigide de forme massive allongée le long d'un axe X-X de symétrie.

Ce racleur 1 comporte deux segments annulaires d'usure 2 et 3 montés de façon amovible sur un corps allongé 4 comportant une portion centrale 4B sur laquelle sont engagés les segments d'usure 2 et 3, et deux portions extrêmes 4A et 4C de même forme.

Ce corps est formé de deux pièces complémentaires 5 et 6 fixées l'une à l'autre par un écrou 7 prisonnier dans l'une 5 des pièces et une vis 8 engagée dans l'autre pièce 6. La pièce 5 est surmoulée sur l'écrou 7 tandis qu'un canal d'accès 9 y est ménagé pour la pénétration de la vis 8 jusqu'à l'écrou. La pièce 6 est traversée axialement, en regard du canal d'accès, par un canal 10 en deux tronçons de diamètres différents raccordés par un épaulement 11 destiné à servir d'appui pour la tête 8A de la vis. Un bouchon 12 est engagé à force dans le tronçon de plus grand diamètre pour isoler la vis de façon étanche vis à vis de l'extérieur.

Les pièces 5 et 6 constituent chacune l'une des portions extrêmes 4A ou 4C, et forment conjointement la portion centrale 4B.

Un anneau 13 à aimantation radiale permanente est engagé dans un évidement 14 ménagé axialement dans la pièce 6 à partir de la surface d'affrontement des deux pièces : il est donc ici amovible. Cet aimant est ici sensiblement situé à mi-longueur du racleur.

L'aimant 13 est ici uniquement positionné radialement par sa paroi externe, et définit intérieurement un vide. En variante non représentée cet anneau est engagé dans une gorge annulaire.

Un manchon 15 est engagé autour de la portion centrale 4B, axialement entre les segments d'usure 2 et 3.

Les portions extrêmes 4A et 4C sont tronconiques et comportent des faces extrêmes sensiblement planes, tandis que le manchon 15, conformé en diabolo, présente une surface interne cylindrique et une surface externe concave. Les segments d'usure sont en saillie radiale vis à vis des portions 4A, 4B et 4C et le manchon 15 constitue entre ces segments, avec la portion centrale 4B, une portion médiane étranglée.

Les segments d'usure sont solidaires du manchon engagé sur la portion centrale : les segments d'usure, font partie du manchon dont ils bordent axialement la surface externe concave.

De préférence, ce manchon 15 comporte en outre, axialement en saillie sur chacun de ses flancs transversaux bordant les segments d'usures 2 et 3, une nervure 20 destinée à pénétrer dans les portions extrêmes 4A et 4C.

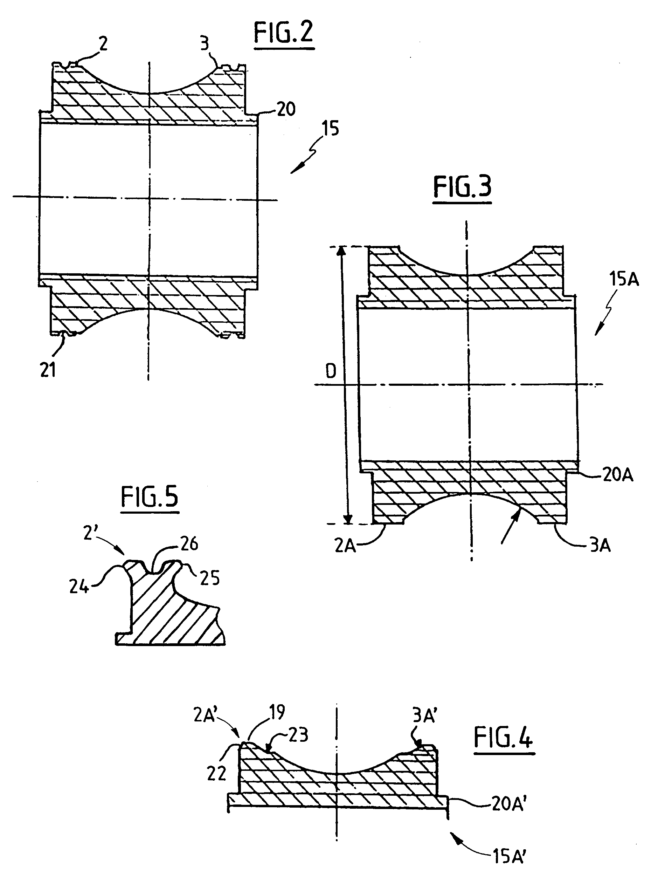

Dans cet exemple des figures 1 et 2, une gorge 21 est ménagée radialement en creux dans les segments d'usure 2 et 3.

Un manchon 18 forme entretoise entre l'écrou et la tête de la vis.

Dans la version simplifiée de la figure 3, cette gorge est supprimée et les segments d'usure 2A et 3A sont lisses (les signes de références sont les mêmes qu'à la figure 2, avec addition de l'indice A).

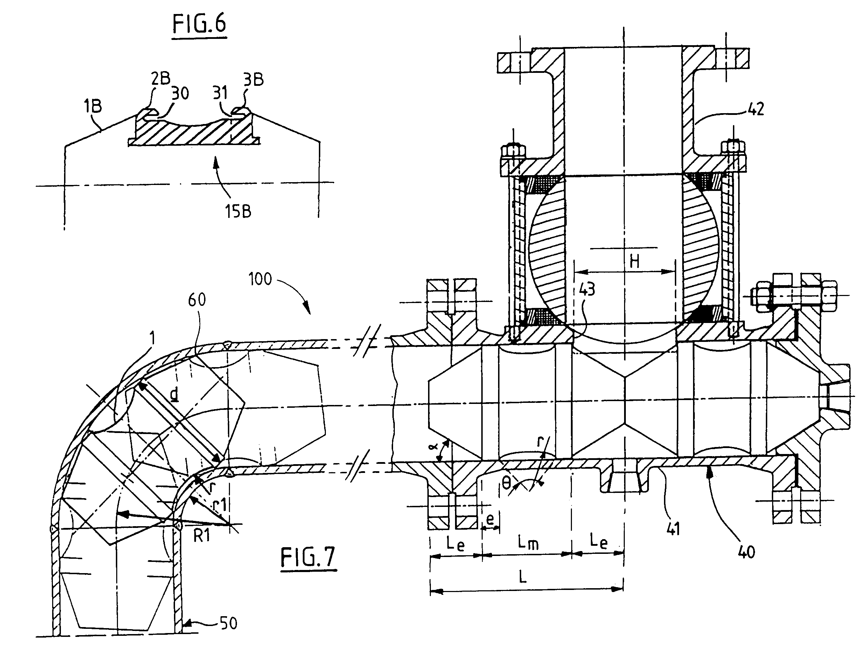

Dans la variante de la figure 4 (à rapprocher de celle de la figure 3 avec addition d'un indice "prime"), les segments d'usure 2A' et 3A' comportent en saillie radiale un bourrelet 19 bordé par deux chanfreins dont l'un 22, du côté des portions extrêmes, est tronconique tandis que l'autre 23 est arrondi, constitué par un rayon de courbure constant tout au long de la circonférence du segment.

Dans la variante de la figure 5 (à rapprocher de la figure 2 avec addition de l'indice "prime"), chaque segment d'usure 2' présente en saillie radiale deux bourrelets annulaires 24 et 25 formant lèvres de raclage séparés par une gorge 26.

Dans la variante de la figure 6, à rapprocher de la figure 2 avec addition de l'indice "prime" B, les segments d'usure 2B et 3B présentent des fentes cylindriques 30 et 31 débouchant axialement l'une vers l'autre, en sorte de former des lèvres cylindriques de raclage bordées par des chanfreins.

La figure 7 présente divers racleurs du type de celui de la figure 1 en divers points d'une canalisation 100 de diamètre intérieur d constant, partiellement représentée.

Dans cette canalisation est disposée une vanne 3-voies 40 (du type décrit dans une demande de brevet du même jour) et un coude 50 dont le rayon moyen de courbure R1 est approximativement égal à d (c'est la plus petite valeur du rayon de courbure que l'on rencontre en pratique dans les canalisations).

En pratique le diamètre des segments d'usure au repos est légèrement supérieur à d de manière à ce que l'introduction du racleur dans la canalisation se traduise par une compression radiale de quelques % (entre 0 et 5%, le plus souvent à peu près 2-3%) propre à assurer en translation un raclage approprié par frottement de la paroi interne de la canalisation.

Si Lₑ est la longueur des parties terminales tronconiques du racleur et α leur demi angle au sommet, ces grandeurs sont choisies en sorte que, dans le coude 50, l'arête 60 bordant la tranche plane de l'une des parties terminales tronconiques affleure l'intérieur du coude en sorte de guider en basculement le racleur. D'autre part cette longueur Lₑ est avantageusement égale à la moitié de la dimension longitudinale H de l'ouverture 43 par laquelle le tronçon principal 41 de la vanne 40 communique avec son tronçon de dérivation 42. L'angle α est par ailleurs avantageusement choisi en sorte d'assurer une déflexion efficace d'un liquide circulant depuis le tronçon de dérivation 42 vers la canalisation 100 (en supposant enlevé le racleur situé à gauche dans la vanne 40), sans pour autant gêner cet écoulement.

La longueur Lₘ séparant les deux parties terminales est avantageusement choisie en sorte que dans le coude 50, les segments restent comprimés en sorte de pouvoir effectuer un raclage satisfaisant. D'autre part le rayon de courbure r de la zone médiane étranglée est inférieur au rayon minimal r₁ du coude 50, et donc à d/2, pour éviter un coincement dans le coude.

Cela amène à préférer les plages dimensionnelles suivantes, qui sont avantageusement satisfaites toutes à la fois si l'on souhaite aboutir à l'optimum précité (en prenant D égal au diamètre des segments à l'état non comprimé : on a donc D/d compris entre 1,02 et 1,05 environ le plus souvent) :
- α approximativement égal à π/8 (compris entre 20 et 25°) ; de préférence cet angle est au moins égal à 20° ;
- Lₑ/D approximativement compris entre 0,35 et 0,45 ;
- Lₘ/D approximativement compris entre 0,75 et 0,85 ;
- la distance entre les segments vaut approximativement r ;
- L/D approximativement compris entre 1,55 et 1,65 ;
- r/D approximativement compris entre 0,40 et 0,50 ;
- le secteur angulaire Θ sur lequel s'étend cet étranglement est compris entre 50 et 70°, de préférence voisin de π/3.

A titre d'exemple, pour un diamètre d de 102 mm (c'est-à-dire environ 4 "pouces"), on choisit :
L = 170 mm
Lₑ = 45 mm
Lₘ = 80 mm
α = 23°
r = 50 mm
e, épaisseur des segments, égale à 15 mm.

La figure 7 donne un exemple de valeur de α bien plus importante (45°).

Les segments d usure (et le manchon intermédiaire) sont avantageusement en polyuréthane avec une dureté SHORE A comprise entre 60 et 90, tandis que le corps lui-même est par exemple en polyuréthane avec une dureté SHORE A comprise entre 65 et 80, c'est-à-dire, selon les cas, inférieure ou supérieure à celle des segments.

A titre préféré les segments 2A, 3A, 2A', 3A' des figures 3 et 4 sont particulièrement bien adaptés à des canalisations dont les tolérances sur le diamètre interne sont larges (± 3mm) et leur dureté SHORE A est choisie égale entre 60 (pour la figure 3) et 65 (figure 4) : la qualité du raclage est moyenne tandis que la durée de vie des segments de raclage est faible.

Pour les tolérances moyennes (± 2mm) on préfère les segments 2, 3, 2', 3' des figures 2 et 5 avec une dureté SHORE A choisie autour de 80 : la qualité du raclage est bonne tandis que la durée de vie des segments est moyenne.

Enfin pour des tolérances serrées (± 1mm) sur le diamètre interne de la canalisation considérée, on préfère les segments 2B, 3B de la figure 6 avec une dureté SHORE A de 90 environ : le raclage obtenu est excellent et les segments ont une longue durée de vie.

On appréciera que ces diverses formes correspondent à des compromis différents entre les exigences contradictoires de résistance à l'usure et de déformabilité radiale : les figures 3 et 4 correspondent à une déformabilité par compression, les figures 2 et 5 proposent deux étages de compression (dans un premier temps seules les nervures se compriment radialement en s'étalant latéralement) et la figure 6 correspond à une déformabilité par flexion radiale des lèvres.

On appréciera que les faces planes transversales limitant ces portions extrêmes assurent une grande surface de contact en cas de butée d'un racleur l'un contre l'autre, ce qui en réduit les risques d'usure en cas de chocs lors de leur venue en butée.

L'aimant 13 permet un repérage en position du racleur dans la conduite.

## Revendications

1. Racleur bidirectionnel pour conduite de distribution de liquide, comportant deux portions terminales (4A, 4C), une portion médiane étranglée comportant un manchon (15, 15A, 15A', 15B) de surface externe concave entourant une portion radialement centrale (4B), et deux segments d'usure (2, 3 ; 2A, 3A ; 2A', 3A' ; 2' ; 2B, 3B) montés amovibles autour de la portion radialement centrale et maintenus axialement de part et d'autre de la portion médiane étranglée par une vis (8) engagée dans une pièce (6) dont fait partie l'une des portions terminales et un écrou (7) engagé dans une autre pièce (5) dont fait partie l'autre des portions terminales, caractérisé en ce que l'écrou (7) est solidaire de cette autre pièce (5), les deux pièces sont assujetties l'une contre l'autre par l'écrou et la vis en formant, de façon complémentaire l'une de l'autre, un corps allongé traversant le manchon, et les segments d'usure sont solidaires du manchon.

2. Racleur selon la revendication 1, caractérisé en ce que ces segments d usure présentent axialement en regard des portions terminales une nervure de centrage (20).

3. Racleur selon la revendication 1 ou la revendication 2, caractérisé en ce que les segments d'usure amovibles (2A, 3A) ont une surface radialement externe lisse.

4. Racleur selon la revendication 1 ou la revendication 2, caractérisé en ce que les segments d'usure amovibles (2A', 3A') présentent en saillie radialement externe, un bourrelet (19) bordé par deux chanfreins (22, 23).

5. Racleur selon la revendication 1 ou la revendication 2, caractérisé en ce que les segments d'usure (2, 3 ; 2') présentent une gorge (21, 26) annulaire ouverte radialement vers l'extérieur.

6. Racleur selon la revendication 5, caractérisé en ce que la gorge sépare deux bourrelets (24, 25) formant lèvres de raclage.

7. Racleur selon la revendication 1 ou la revendication 2, caractérisé en ce que lesdits segments (2B, 3B) présentent des fentes cylindriques (30, 31) débouchant axialement l'une vers l'autre.

8. Racleur selon l'une quelconque des revendications 1 à 7, caractérisé en ce que les portions terminales (4A, 4C) sont de forme tronconique.

9. Racleur selon la revendication 8, caractérisé en ce que le demi-angle au sommet (α) de ces portions tronconiques est compris entre 20 et 25°.

10. Racleur selon la revendication 8 ou la revendication 9, caractérisé en ce que la longueur Lₑ des portions tronconiques vaut entre 35% et 45% du diamètre D des segments d'usure.

11. Racleur selon l'une quelconque des revendications 8 à 10, caractérisé en ce que la distance Lₘ entre ces portions tronconiques est sensiblement comprise entre 0,75 et 0,85 fois le diamètre D des segments d'usure.

12. Racleur selon l'une quelconque des revendications 8 à 11, caractérisé en ce que la longueur L de ce racleur est sensiblement comprise entre 1,55 et 1,65 fois le diamètre D des segments d'usure.

13. Racleur selon l'une quelconque des revendications 8 à 12, caractérisé en ce que la portion médiane étranglée a un rayon de courbure r compris entre 0,40 et 0,50 fois le diamètre D des segments d'usure.

14. Racleur selon l'une quelconque des revendications 1 à 13, caractérisé en ce que la vis et l'écrou sont isolés de façon étanche vis à vis de l'extérieur dudit racleur.

15. Racleur selon l'une quelconque des revendications 1 à 14, caractérisé en ce qu'il comporte, sensiblement à mi-longueur, un anneau (13) à aimantation radiale permanente.

16. Racleur selon la revendication 15, caractérisé en ce que cet anneau (13) est monté de façon amovible dans l'une (6) des pièces complémentaires.

17. Utilisation du racleur selon l'une quelconque des revendications 1 à 16 pour le raclage d'une conduite comportant au moins un coude dont le rayon de courbure moyen (R1) vaut approximativement une fois le diamètre externe D des segments d'usure.

## Claims

1. Two-directional scraper for a liquid-distribution pipe, having two end portions (4A, 4C), a constricted middle portion with a sleeve (15, 15A, 15A', 15B) with a concave external surface surrounding a radially central portion (4B), and two wear segments (2, 3; 2A, 3A; 2A', 3A'; 2'; 2B, 3B) mounted removably around the radially central portion and held axially on each side of the constricted middle portion by a bolt (8) engaged in a piece (6), of which one of the end portions forms part, and a nut (7) engaged in another piece (5), of which the other one of the end portions forms part, characterised in that the nut (7) is fixed to this other piece (5), the two pieces are fixed against each other by the nut and screw forming, complementary to each other, an elongate body passing through the sleeve, and the wear segments are fixed to the sleeve.

2. Scraper according to Claim 1, characterised in that these wear segments have axially, opposite the end portions, an alignment rib (20).

3. Scraper according to Claim 1 or Claim 2, characterised in that the removable wear segments (2A, 3A) have a smooth radially external surface.

4. Scraper according to Claim 1 or Claim 2, characterised in that the removable wear segments (2A', 3A') have, projecting radially to the outside, a collar (19) bordered by two bevels (22, 23).

5. Scraper according to Claim 1 or Claim 2, characterised in that the wear segments (2, 3; 2') have an annular groove (21, 26) open radially towards the outside.

6. Scraper according to Claim 5, characterised in that the groove separates two collars (24, 25) forming scraping lips.

7. Scraper according to Claim 1 or Claim 2, characterised in that the said segments (2B, 3B) have cylindrical slots (30, 31) opening out axially towards each other.

8. Scraper according to any one of Claims 1 to 7, characterised in that the end portions (4A, 4C) are in the shape of a truncated cone.

9. Scraper according to Claim 8, characterised in that the half angle at the apex (α) of these frustoconical portions is between 20 and 25°.

10. Scraper according to Claim 8 or Claim 9, characterised in that the length Lₑ of the frustoconical portions is between 35% and 45% of the diameter D of the wear segments.

11. Scraper according to any one of Claims 8 to 10, characterised in that the distance Lₘ between these frustoconical portions is approximately between 0.75 and 0.85 times the diameter D of the wear segments.

12. Scraper according to any one of Claims 8 to 11, characterised in that the length L of this scraper is approximately between 1.55 and 1.65 times the diameter D of the wear segments.

13. Scraper according to any one of Claims 8 to 12, characterized in that the constricted middle portion has a radius of curvature r between 0.40 and 0.50 times the diameter D of the wear segments.

14. Scraper according to any one of Claims 1 to 13, characterized in that the bolt and nut are isolated sealingly vis-a-vis the exterior of the said scraper.

15. Scraper according to any one of Claims 1 to 14, characterised in that it has, approximately half way along, a ring (13) with permanent radial magnetisation.

16. Scraper according to Claim 15, characterised in that this ring (13) is mounted removably in one (6) of the complementary pieces.

17. Use of the scraper according to any one of Claims 1 to 16 for scraping a pipe having at least one bend, the average radius of curvature (R1) of which is approximately equal to the external diameter D of the wear segments.

## Patentansprüche

1. Zwei-Richtungs-Molch für eine Flüssigkeitsverteilungsleitung, umfassend: zwei Endabschnitte (4A, 4C), einen eingeengten mittleren Abschnitt, der eine Manschette (15, 15A, 15A', 15B) mit konkaver äußerer Oberfläche umfaßt, die einen radial zentralen Abschnitt (4B) umgibt, und zwei Verschleißsegmente (2, 3; 2A, 3A; 2A', 3A'; 2'; 2B, 3B), die um den radial zentralen Abschnitt herum auswechselbar angebracht sind und beiderseits des eingeengten mittleren Abschnitts durch eine Schraube (8), welche in einem einen der Endabschnitte aufweisenden Teil (6) in Eingriff ist, und eine Mutter (7), welche in einem weiteren den anderen der Endabschnitte aufweisenden Teil (5) in Eingriff ist, axial gehalten sind, dadurch gekennzeichnet, daß die Mutter (7) mit diesem weiteren Teil (5) einstückig ist, die beiden Teile durch die Mutter und die Schraube unter Bildung, in zueinander komplementärer Art und Weise, eines die Manschette durchsetzenden länglichen Körpers aneinander befestigt sind, und die Verschleißsegmente mit der Manschette einstückig sind.

2. Molch nach Anspruch 1, dadurch gekennzeichnet, daß diese Verschleißsegmente axial bezüglich der Endabschnitte einen Zentriervorsprung (20) aufweisen.

3. Molch nach Anspruch 1 oder Anspruch 2, dadurch gekennzeichnet, daß die auswechselbaren Verschleißsegmente (2A, 3A) eine radial äußere ebene Oberfläche aufweisen.

4. Molch nach Anspruch 1 oder Anspruch 2, dadurch gekennzeichnet, daß die auswechselbaren Verschleißsegmente (2A', 3A') radial nach außen vorspringend eine durch zwei Schrägkanten (22, 23) begrenzte Wulst (19) aufweisen.

5. Molch nach Anspruch 1 oder Anspruch 2, dadurch gekennzeichnet, daß die Verschleißsegmente (2, 3; 2') eine radial zur Außenseite hin offene ringförmige Nut (21, 26) aufweisen.

6. Molch nach Anspruch 5, dadurch gekennzeichnet, daß die Nut zwei Wülste (24, 25) trennt, welche Schablippen bilden.

7. Molch nach Anspruch 1 oder Anspruch 2, dadurch gekennzeichnet, daß die Segmente (2B, 3B) zylindrische Schlitze (30, 31) aufweisen, die zueinander hin axial geöffnet sind.

8. Molch nach einem der Ansprüche 1 bis 7, dadurch gekennzeichnet, daß die Endabschnitte (4A, 4C) eine kegelstumpfartige Form aufweisen.

9. Molch nach Anspruch 8, dadurch gekennzeichnet, daß der Spitzen-Halbwinkel (α) dieser kegelstumpfartigen Abschnitte zwischen 20 und 25° liegt.

10. Molch nach Anspruch 8 oder Anspruch 9, dadurch gekennzeichnet, daß die Länge Lₑ der kegelstumpfartigen Abschnitte zwischen 35% und 45% des Durchmessers D der Verschleißsegmente beträgt.

11. Molch nach einem der Ansprüche 8 bis 10, dadurch gekennzeichnet, daß der Abstand Lₘ zwischen diesen kegelstumpfartigen Abschnitten im wesentlichen zwischen dem 0,75- und 0,85-fachen des Durchmessers D der Verschleißsegmente liegt.

12. Molch nach einem der Ansprüche 8 bis 11, dadurch gekennzeichnet, daß die Länge L dieses Molchs im wesentlichen zwischen dem 1,55- und 1,65-fachen des Durchmessers D der Verschleißsegmente liegt.

13. Molch nach einem der Ansprüche 8 bis 12, dadurch gekennzeichnet, daß der eingeengte mittlere Abschnitt einen zwischen dem 0,40- und 0,50-fachen des Durchmessers D der Verschleißsegmente liegenden Krümmungsradius r aufweist.

14. Molch nach einem der Ansprüche 1 bis 13, dadurch gekennzeichnet, daß die Schraube und die Mutter dichtend gegenüber der Außenseite des Molchs isoliert sind.

15. Molch nach einem der Ansprüche 1 bis 14, dadurch gekennzeichnet, daß er im wesentlichen in Längenmitte einen Ring (13) zur permanenten radialen Magnetisierung umfaßt.

16. Molch nach Anspruch 15, dadurch gekennzeichnet, daß dieser Ring (13) in auswechselbarer Art und Weise in dem einen (6) der komplementären Teile angebracht ist.

17. Verwendung des Molchs nach einem der Ansprüche 1 bis 16 zum Ausschaben einer Leitung, die wenigstens ein Kniestück umfaßt, dessen mittlerer Krümmungsradius (R1) etwa das einfache des Außendurchmessers D der Verschleißsegmente beträgt.
